# EUROPÄISCHE PATENTANMELDUNG

(11) **EP 0 944 230 A2**
(43) Veröffentlichungstag der Anmeldung: **22.09.1999**
(21) Anmeldenummer: 99105511.2
(22) Anmeldetag: 17.03.1999
(51) Int. Cl.: H04M 15/28, H04M 15/30

(54) **Vorrichtung und Verfahren zur Erzeugung von Gebührenimpulsen für Telekommunikationsverbindungen**

(30) Priorität: 18.03.1998 DE 19811710
(71) Anmelder: Mohr, Gerhard-Dieter, 68259 Mannheim (DE)
(72) Erfinder: Mohr, Gerhard-Dieter, 68259 Mannheim (DE)
(74) Vertreter: Mierswa, Klaus, Dipl.-Ing.

(57) **Zusammenfassung**

Die Erfindung betrifft eine Vorrichtung und ein Verfahren zur Erzeugung von Gebührenimpulsen zur Gebührenermittlung von Telekommunikationsverbindungen anhand verschiedener Parameter einer von einer Nebenstelle der TK-Anlage oder von einem Endgerät ausgehenden Verbindung. Die Parameter werden von einer Steuereinheit aus den über die Anschlußleitung übertragenen Signalen ermittelt, wobei der Zugriff der Vorrichtung auf die Anschlußleitung weitgehend lastfrei ist. Anhand der charakteristischen Parameter, darunter ggfs. auch die Anrufzeit, werden Gebührendaten der aktuellen Telekommunikationsverbindung aus einer Datenbank abfragt und daraus der Gebührentakt bestimmt. Mit einem Impulsgenerator werden während der Dauer der Kommunikationsverbindung Gebührenimpulse im Gebührentakt erzeugt, welche auf die Netzanschlußleitung gegeben werden und vom Endgerät bzw. der TK-Anlage verwertbar sind. Mit der Vorrichtung können bestehende TK-Anlagen oder einfache Telekommunikationsanschlüsse einfach durch Zuschalten aufgerüstet werden. Somit besteht für den Betreiber der TK-Anlage bzw. den Nutzer eines Anschlusses die Möglichkeit, auf einfache Weise eine Übersicht über die Kosten einer Kommunikationsverbindung zu erhalten, auch wenn die Verbindung über das Netz eines Netzanbieters erfolgt, der selbst keine direkte, von der TK-Anlage oder einem Endgerät verwertbare Gebühreninformation in Form von Gebührenpulsen zur Verfügung stellt. In halböffentlichen Einrichtungen, z.B. Hotels oder Krankenhäusern, ermöglicht die Erfindung die Nutzung günstiger Tarife wechselnder Netzbetreiber zusammen mit deren direkter Abrechnung.

## Beschreibung

### Technisches Gebiet:

Die Erfindung betrifft eine Vorrichtung und ein Verfahren zur Erzeugung von Gebührenimpulsen zur Gebührenermittlung von Telekommunikationsverbindungen für die Telekommunikation, die über das Kommunikationsnetz eines Netzanbieters aufgebaut werden, der keine von bekannten TK-Anlagen verwertbaren Gebühreninformationen zur Verfügung stellt.

### Stand der Technik:

Mit der Öffnung des Telekommunikationsmarktes für beliebige Netzanbieter ist für die Betreiber von Telekommunikationsanlagen, insbesondere Nebenstellenanlagen in halböffentlichen Einrichtungen, wie Hotels oder Krankenhäusern, das Problem aufgetreten, daß diese Netzanbieter in der Regel keine von einer bestehenden TK-Anlage verwertbare Gebühreninformation zur Verfügung stellen. Dem Betreiber einer solchen TK-Anlage, die auch von Fremdnutzern genutzt wird, z.B. von Hotelgästen, ist es somit nicht mehr möglich, dem Fremdnutzer die Gebühren einer Kommunikationsverbindung exakt zu berechnen, die über ein Netz ohne verwertbare Gebühreninformation geführt wird. Gegenwärtig sperren daher viele TK-Anlagenbesitzer, auch Hoteliers, ihre Anlage für abgehende Kommunikationsverbindungen, die über ein solches Netz durchgeführt werden sollen. Die TK-Anlage erkennt dabei die Netzbetreiber-Auswahlziffer und baut eine Kommunikationsverbindung nur bei zugelassenen Auswahlziffern auf; für alle anderen ist das Endgerät gesperrt. Dies ist unbefriedigend, da somit preislich günstige bzw. unterschiedliche Angebote wechselnder Netzbetreiber nicht nutzbar sind.

Unvorteilhaft ist der fehlende Gebührenimpuls auch für Privatnutzer mit kleinen Telefonanlagen, da somit beim Telefonieren eine direkte Übersicht über die anfallenden Telefonkosten bisher nicht möglich ist.

### Technische Aufgabe:

Der Erfindung liegt daher die Aufgabe zugrunde, eine Vorrichtung zur Gewinnung von Gebühreninformationen eines beliebigen Netzbetreibers bezüglich eines aktuellen Anrufs zur Verfügung zu stellen, welche die Gebühreninformation derart erzeugt, daß sie von herkömmlichen TK-Anlagen und Endgeräten direkt verwertet werden kann, wenn Gebühreninformationen, wie Gebührenimpulse, aus welchen Gründen auch immer - nicht zur Verfügung stehen sollten.

### Offenbarung der Erfindung und deren Vorteile:

Die Aufgabe wird gelöst durch eine Vorrichtung zur Erzeugung von Gebührenimpulsen zur Gebührenermittlung von Telekommunikationsverbindungen für die Telekommunikation, wobei die Vorrichtung
a) zur Ein- und Auskopplung von Signalen weitgehend lastfrei auf die Netzanschlußleitung eines Endgerätes und/oder einer TK-Anlage zuzugreifen imstande ist;
b) einen Wandler aufweist, der über die Netzanschlußleitung übertragene Signale in binäre Signale umzuwandeln imstande ist, wobei die vom Endgerät oder von der TK-Anlage erzeugten Wählsignale in eine binäre Signalfolge umgewandelt werden, die wenigstens teilweise der gewählten Ziffernkombination entspricht;
c) eine Datenbank aufweist, in welcher Gebührendaten für verschiedene Netzbetreiber und/oder Zeiten und/oder Anrufziele und/oder Anrufzielklassen gespeichert sind;
d) eine Steuereinheit aufweist, die anhand charakteristischer Parameter des binären Signals Gebührendaten der aktuellen Telekommunikationsverbindung aus der Datenbank abfragt und die Dauer T eines Gebührentakts bestimmt;
e) einen Impulsgenerator aufweist, der während der Dauer der Kommunikationsverbindung Gebührenimpulse im Takt T erzeugt, welche auf die Netzanschlußleitung gegeben werden und vom Endgerät bzw. der TK-Anlage verwertbar sind.

Weitere vorteilhafte Ausgestaltungen der Erfindung sind in den Unteransprüchen gekennzeichnet.

Der erfindungsgemäße Taktgeber bzw. Gebührenimpuls-Generator wird bei analogen Telefonanlagen zwischen Netzanschluß und Telefonanlage geschaltet. Um bestehende TK-Anlagen aufrüsten zu können, weist die Vorrichtung vorzugsweise eine erste und eine zweite Schnittstelle auf, über welche sie einfach zwischen Netzanschluß und TK-Anlage angeschlossen werden kann. Die Netzanschlußleitung wird dabei vom Netzanschluß über beide Schnittstellen geführt. Um die lastfreie Ein- bzw. Auskopplung von Signalen, die über die Netzanschlußleitung übertragen werden, zu realisieren, sind die Komponenten der Vorrichtung, die einer Stromversorgung bedürfen, insbesondere Wandler, Datenbank, Steuereinheit und Impulsgenerator, galvanisch von der Netzanschlußleitung getrennt und weisen eine vom Kommunikationsnetz unabhängige Stromversorgung auf. Die galvanische Trennung und die Ein- bzw. Auskopplung von Signalen erfolgt beispielsweise mittels eines Transformators.

Bei digitalen Telefonanlagen kann die erfindungsgemäße Vorrichtung zwischen die TK-Anlage und ihre Nebenstelle geschaltet werden, da in diesem Bereich analoge Signal über die Anschlußleitung übertragen werden.

Die Signale, die über die Netzanschlußleitung übertragen und von der erfindungsgemäßen Vorrichtung abgegriffen und ausgewertet werden, sind die Wählsignale, die das Anrufziel codieren, sowie die über die Anschlußleitung übertragenen Signaltöne wie Rufzeichen oder Besetztton. Das Wählsignal kann im Impuls- oder im Mehrfrequenzwählverfahren erzeugt werden. Mittels eines Wandlers, der z.B. ein DTMF-Empfänger ist, wird das ausgekoppelte Signal in ein binäres Signal umgewandelt, welches von der Steuereinheit auswertbar ist. Ebenso können die Hinweistöne umgewandelt und von der Steuereinheit erkannt und ausgewertet werden, wodurch sich Beginn und Ende einer Verbindung ermitteln lassen.

Die Steuereinheit ermittelt aus dem in eine binäre Signalfolge umgewandelten Wählsignal folgende Komponenten, sofern diese vorhanden sind: Die Netzbetreiber-Auswahlziffer, die einer angewählten Rufnummer vorangestellt ist, die Länder- und die Ortsnetzvorwahl. Zunächst wird beispielsweise ermittelt, ob die Netzbetreiber-Auswahlziffer einem Kommunikationsnetz entspricht, über welches keine Gebühreninformationen übermittelt werden. Ist die der Fall, wird das Wählsignal hinsichtlich des Anrufsziels ausgewertet. Es wird festgestellt, welcher Tarif des ermittelten Netzbetreibers für den aktuellen Anruf anzuwenden ist. Dazu wird vorzugsweise anhand der angewählten Vorwahl sowie anhand Informationen über die Ortsnetzzugehörigkeit der TK-Anlage die Anrufzielklasse ermittelt, d.h. ob der Anruf innerhalb des Ortsnetzes der TK-Anlage bleibt oder ob der Anrufer ein Anrufziel in der Nah-, Fern- oder einer sonstigen Zone entsprechend der Einteilung des jeweiligen Netzbetreibers anwählt.

Des Weiteren wird vorzugsweise die aktuelle Zeit des Anrufs bei der Gebührenermittlung berücksichtigt. Dazu weist die Vorrichtung eine Uhr auf, so daß die Datenbankabfrage mit der aktuellen Uhrzeit erfolgen kann und die Gebührendaten auch während eines Anrufs an zeitlich bedingte Tarifänderungen angepaßt werden können.

In der Datenbank sind Gebührendaten vorzugsweise sämtlicher Netzanbieter hinterlegt. Die Gebührendaten können auch direkt in Form der Dauer T eines Gebührenintervalls vorliegen. Dem Benutzer der Vorrichtung steht dabei frei, welche Kosten er pro Gebühreneinheit veranschlagt und hierfür gegebenenfalls dem Fremdbenutzer berechnet.

Ein erster Gebührenimpuls wird durch den Impulsgenerator auf Veranlassung der Steuereinheit erzeugt, wenn die Steuereinheit den Beginn einer Kommunikationsverbindung identifiziert. Dieses geschieht vorzugsweise dadurch, daß diese Systemsteuerung die Rufzeichen entsprechenden binären Signale auswertet und den Beginn einer Verbindung diagnostiziert, wenn sie innerhalb eines vorbestimmbaren Zeitfensters nach Erkennung eines Rufzeichens kein weiteres Rufzeichen identifiziert, jedoch das entsprechende rufende Endgerät noch aktiv ist. Das Verbindungsende wird der Vorrichtung durch den Besetztton angezeigt, der von der Steuereinheit ebenfalls ausgewertet wird.

Die Steuereinheit veranlaßt den Impulsgenerator zur Erzeugung von Gebührenimpulsen jeweils im zeitlichen Abstand T, wobei T vorzugsweise an sich während der Kommunikationsverbindung ergebende Tarifänderungen, insbesondere durch Änderung der Uhrzeit, angepaßt wird.

Die Gebührenimpulse, die vom Impulsgenerator erzeugt werden, sind so zu wählen, daß sie von bestehenden TK-Anlagen erkannt werden können. Dies ist gegenwärtig der Fall, wenn der Gebührenimpuls eine Frequenz von 16 kHz hat. Die TK-Anlage kann dabei nicht unterscheiden, ob der Gebührenimpuls aus dem Kommunikationsnetz oder vom zugeschalteten Taktgeber kommt. Die Abrechnungsmethoden bedürfen somit keiner Anpassung.

Ein Verfahren zur Erzeugung von Gebührenimpulsen zur Gebührenermittlung von Telekommunikationsverbindungen für die Telekommunikation ist dadurch gekennzeichnet,
a) dass die Signale weitgehend lastfrei auf die Netzanschlußleitung eines Endgerätes und/oder einer TK-Anlage eingekoppelt oder ausgekoppelt werden
b) die über die Netzanschlußleitung übertragenen Signale in binäre Signale umgewandelt werden, wobei die vom Endgerät oder von der TK-Anlage erzeugten Wählsignale in eine binäre Signalfolge umgewandelt werden, die wenigstens teilweise der gewählten Ziffernkombination entspricht;
c) in einer Datenbank Gebührendaten für verschiedene Netzbetreiber und/ oder Zeiten und/oder Anrufziele und/oder Anrufzielklassen gespeichert sind;
d) anhand charakteristischer Parameter des binären Signals Gebührendaten der aktuellen Telekommunikationsverbindung aus der Datenbank abfragt werden und die Dauer T eines Gebührentakts bestimmt wird;
e) während der Dauer der Kommunikationsverbindung Gebührenimpulse im Takt T erzeugt werden, welche auf die Netzanschlußleitung gegeben werden und vom Endgerät bzw. der TK-Anlage verwertet werden.

Mit der Erfindung wird in vorteilhafter Weise die Möglichkeit geschaffen, bestehende TK-Anlagen oder einfache Telekommunikationsanschlüsse in der Weise aufzurüsten, daß auch Kommunikationsverbindungen, die über Netze ohne externe Bereitstellung von Gebührenimpulsen geführt werden, einfach abgerechnet werden können. Bisher war es aufgrund der fehlenden Abrechnungsmöglichkeit notwendig, derartige Anschlüsse für bestimmte Netzbetreiber zu sperren. Somit besteht für den Betreiber der TK-Anlage bzw. den Nutzer eines Anschlusses die Möglichkeit, auf einfache Weise eine Übersicht über die Kosten einer Kommunikationsverbindung zu erhalten, auch wenn die Verbindung über das Netz eines Netzanbieters erfolgt, der selbst keine direkte, von der TK-Anlage oder einem Endgerät verwertbare Gebühreninformation in Form von Gebührenpulsen zur Verfügung stellt.

### Kurzbeschreibung der Zeichnung, in der zeigen:

- Figur 1: eine Schaltung zur Signalerkennung und zum Einkoppeln des Gebührenimpulses;
- Figur 2: ein Blockschaltbild der Schaltung zur Generierung von Gebührenimpulsen und
- Figur 3: ein Detail-Schaltbild einer möglichen Ausführungsform gemäß der Figur 1.

### Wege zur Ausführung der Erfindung:

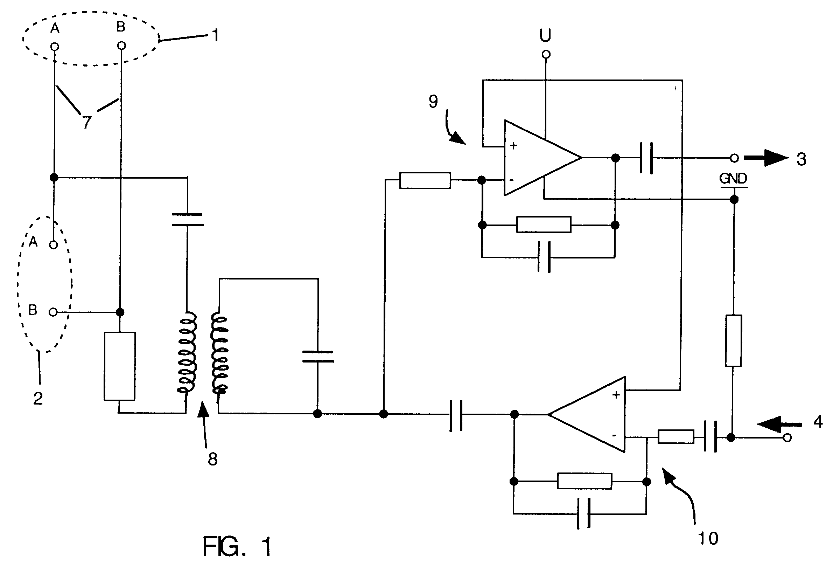

Figur 1 zeigt den Analogteil einer Schaltung zur Signalerkennung und zum Einkoppeln des Gebührenimpulses als Bestandteil eines erfindungsgemäßen Taktgebers. Die Schaltung weist zwei Schnittstellen 1, 2 mit den Anschlüssen A - B zum Anschluß an den Netzanschluß und eine TK-Anlage bzw. zur Schaltung zwischen TK-Anlage und einer ihrer Nebenstellen auf. Die Schnittstellen sind in diesem Fall analoge Schnittstellen, z.B. a/b/Schnittstellen. Die Netzanschlußleitung 7, eine Doppelleitung, ist über beide Schnittstellen 1, 2 geführt.

Der Hauptteil der hier dargestellten Schaltung ist von der Anschlußleitung 7 galvanisch mit Hilfe eines Transformators 8 getrennt. Somit können über die Anschlußleitung übertragene Signale ausgekoppelt und in der erfindungsgemäßen Vorrichtung ausgewertet werden, ohne die Signalübertragung über die Anschlußleitung 7 zu beeinträchtigen. Weiterhin wird dadurch eine lastfreie Aus- und Einkopplung von Signalen realisiert. Die Vorrichtung entspricht somit den derzeit geltenden Telekommunikationszulassungserfordernissen. Über den Transformator 8 können weiterhin Signale von der Vorrichtung auf die Anschlußleitung 7 und damit auf die Schnittstellen 1, 2 gegeben werden, wobei die Signale somit von der TK-Anlage und/oder dem Endgerät auswertbar sind.

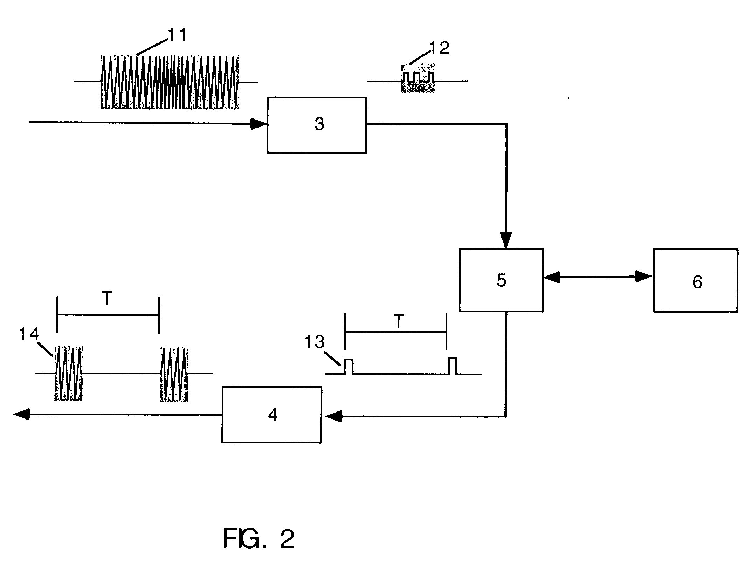

Die mittels des Transformators 8 in den Hauptteil der Schaltungsanordnung übergekoppelten Signale werden mittels eines ersten Komparators 9 weitgehend lastfrei entkoppelt und als Eingangssignal an einen Wandler 3 weitergegeben, siehe Figur 2. Zur lastlosen Entkopplung weist der Komparator 9 eine eigene Spannungsversorgung U auf.

Die von einem Impulsgenerator 4, siehe Figur 2, erzeugten Gebührenimpulse werden als Analogsignal in die Schaltungsanordnung eingespeist und über den Transformator 8 in die Anschlußleitung 7 eingekoppelt. Ein Komparator 10 dient dabei dazu, das Signal auf einem vorbestimmten Pegel zu halten.

Figur 2 zeigt die Auswertung eines Eingangssignals, das ein Wählsignal oder ein Hinweiston, z.B. Rufzeichen oder Besetztzeichen, sein kann, zur Generierung eines Gebührenimpulses mit definiertem Takt T.

Das Eingangssignal 11, herrührend von Anschlußleitung 7, ist ein analoges Signal, welches vom Wandler 3 in ein binäres Signal 12 umgewandelt wird. Die im analogen Eingangssignal 11 enthaltene Information bleibt dabei erhalten. Das binäre Signal 12 wird der Steuereinheit 5 zugeführt, welche dem Signal 12 bestimmte Informationen, z.B. hinsichtlich Netzbetreiber und/oder Vorwahl, entnimmt, und mit diesen oder daraus bestimmten Parametern, vorzugsweise auch unter Berücksichtigung der aktuellen Uhrzeit, eine Datenbankabfrage einer Datenbank 6 vornimmt. In der Datenbank 6 sind dabei Tarifinformationen für verschiedene Netzanbieter gespeichert.

Die Steuereinheit 5 entnimmt den Takt T, in welchem Gebührenimpulse erzeugt werden sollen, direkt aus der Datenbank 6 oder berechnet anhand der Gebühreninformationen aus der Datenbank 6 die Dauer T einer Gebühreneinheit.

Nachdem der Gesprächsbeginn erkannt wurde, erzeugt die Steuereinheit 5 Steuersignale 13 im zeitlichen Abstand T und übermittelt diese an den Impulsgenerator 4. Das Steuersignal 13 veranlaßt den Impulsgenerator 4 zur Generierung eines Gebührenimpulses 14. Somit werden auch die Gebührenimpulse 14 im Abstand T generiert. Diese Gebührenimpulse 14 werden über die Schaltungsanordnung aus Figur 1 in die Netzanschlußleitung 7 eingekoppelt und stehen damit der TK-Anlage zur Auswertung zur Verfügung.

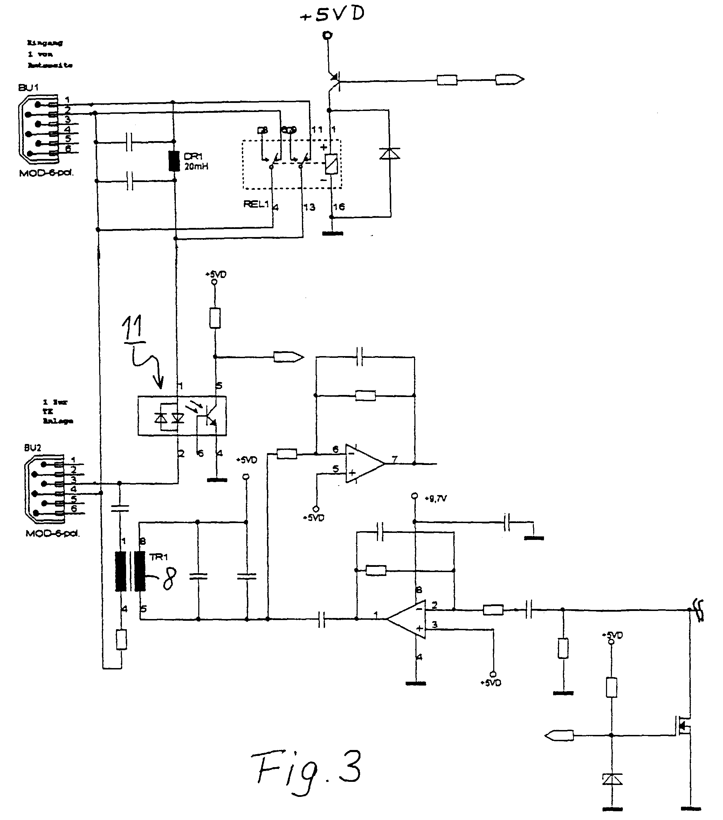

Figur 3 zeigt eine mögliche technische Ausgestaltung zur Verwirklichung der Schaltung gemäß dem Blockschaltbild der Figur 1, wobei darin im oberen Teil der Figur 3 eine Eingangsbrücken- und Sperrschaltung enthalten ist; der untere Teil zeigt das Analogon zur Figur 1. Des Weiteren ist in der Schaltung der Figur 3 ein Optokoppler 11 enthalten, der bei IWV-Wahl die Erkennung bewerkstelligt.

Des Weiteren ist bei ausgeschaltetem Gerät die Sperrschaltung außer Funktion. Das bedeutet, dass in diesem Fall nur die Impulse der TELEKOM AG wirken. Das ist natürlich auch dann der Fall, wenn über die TELEKOM AG, die die Gebührenimpulse zur Verfügung stellt, telefoniert wird.

### Gewerbliche Anwendbarkeit:

Die Erfindung stellt einen Gebührenimpuls-Generator zu Verfügung und ist insbesondere für den Einsatz von Telekommunikationsanschlüssen sowie von Telekommunikationsanlagen geeignet, da mit ihr die Möglichkeit geschaffen ist, bestehende TK-Anlagen oder auch einfache Telekommunikationsanschlüsse in der Weise aufzurüsten, daß auch Kommunikationsverbindungen, die über Netze ohne externe Bereitstellung von Gebührenimpulsen geführt werden, einfach abgerechnet werden können. Besonders in halböffentlichen Einrichtungen, z.B. Hotels oder Krankenhäusern, ermöglicht die Erfindung die Nutzung günstiger Tarife wechselnder Netzbetreiber und gleichzeitig deren direkte Abrechnung.

## Patentansprüche

1. Vorrichtung zur Erzeugung von Gebührenimpulsen (14) zur Gebührenermittlung von Telekommunikationsverbindungen für die Telekommunikation, wobei die Vorrichtung
a) zur Ein- und Auskopplung von Signalen weitgehend lastfrei auf die Netzanschlußleitung (7) eines Endgeräts und/oder einer TK-Anlage zuzugreifen imstande ist;
b) einen Wandler (3) aufweist, der über die Netzanschlußleitung (7) übertragene Signale (11) in binäre Signale (12) umzuwandeln imstande ist, wobei die vom Endgerät oder von der TK-Anlage erzeugten Wählsignale (11) in eine binäre Signalfolge (12) umgewandelt werden, die wenigstens teilweise der gewählten Ziffernkombination entspricht;
c) eine Datenbank (6) aufweist, in welcher Gebührendaten für verschiedene Netzbetreiber und/oder Zeiten und/oder Anrufziele und/oder Anrufzielklassen gespeichert sind;
d) eine Steuereinheit (5) aufweist, die anhand charakteristischer Parameter des binären Signals (12) Gebührendaten der aktuellen Telekommunikationsverbindung aus der Datenbank (6) abfragt und die Dauer T eines Gebührentakts bestimmt;
e) einen Impulsgenerator (4) aufweist, der während der Dauer der Kommunikationsverbindung Gebührenimpulse (14) im Takt T erzeugt, welche auf die Netzanschlußleitung (7) gegeben werden und vom Endgerät bzw. der TK-Anlage verwertbar sind.

2. Vorrichtung nach Anspruch 1, dadurch gekennzeichnet,
daß sie eine Uhr aufweist und die aktuelle Zeit des Anrufs ein Parameter für die Datenbankabfrage ist.

3. Vorrichtung nach Anspruch 1 oder 2, dadurch gekennzeichnet,
daß sie eine erste Schnittstelle (1) und eine zweite Schnittstelle (2) aufweist, wobei die Vorrichtung im Anwendungsfall über beide Schnittstellen (1, 2) zwischen TK-Anlage und Netzanschluß oder zwischen Endgerät und TK-Anlage geschaltet wird und somit die Netzanschlußleitung (7) über beide Schnittstellen (1, 2) geführt ist und wobei die übrigen Vorrichtungskomponenten, insbesondere Wandler (3), Datenbank (6), Steuereinheit (5) und Impulsgenerator (4), galvanisch von der Netzanschlußleitung (7) getrennt sind und eine von Kommunikationsnetz unabhängige Stromversorgung aufweisen.

4. Vorrichtung nach einem der Ansprüche 1 bis 3, dadurch gekennzeichnet,
daß die Schnittstellen (1, 2) jeweils analoge Schnittstellen sind, z.B. a/b-Schnittstellen.

5. Vorrichtung nach einem der vorangegangenen Ansprüche, dadurch gekennzeichnet,
daß Beginn und Ende der Kommunikationsverbindung von der Steuereinheit durch Auswertung der über die Anschlußleitung (7) übertragenen, vom Wandler digitalisierten Signaltöne ermittelt wird

6. Vorrichtung nach Anspruch 5, dadurch gekennzeichnet,
daß die Steuereinheit (5) den Impulsgenerator (4) zur Erzeugung eines ersten Gebührenimpulses (14) veranlaßt, wenn die Steuereinheit (5) innerhalb eines vorbestimmbaren Zeitfensters nach Erkennung eines Rufzeichens kein weiteres Rufzeichen identifiziert und das entsprechende rufende Endgerät noch aktiv ist.

7. Vorrichtung nach Anspruch 5, dadurch gekennzeichnet,
daß das Verbindungsende der Vorrichtung durch den Besetztton angezeigt wird, der von der Steuereinheit (5) ausgewertet wird.

8. Vorrichtung nach einem der vorangegangenen Ansprüche, dadurch gekennzeichnet,
daß der Impulsgenerator (4) einen Gebührenimpuls (14) mit einer Frequenz von 16kHz erzeugt.

9. Vorrichtung nach einem der vorangegangenen Ansprüche, dadurch gekennzeichnet,
daß das binäre Signal (12) der am Endgerät gewählten Nummer entspricht und aus den Komponenten Teilnehmer-Rufnummer, Ortsvorwahl, ggfs. Ländervorwahl und ggfs. Netzbetreiber-Auswahlziffer besteht, wobei die Komponenten Netzbetreiber-Auswahlziffer, Orts und/oder Ländervorwahl zur Abfrage der Gebührendaten verwendete Parameter sind.

10. Vorrichtung nach einem der vorangegangenen Ansprüche, dadurch gekennzeichnet,
daß die Vorrichtung für vorbestimmte Netzbetreiber keine Gebührenimpulse erzeugt.

11. Verfahren zur Erzeugung von Gebührenimpulsen (14) zur Gebührenermittlung von Telekommunikationsverbindungen für die Telekommunikation, dadurch gekennzeichnet,
a) dass die Signale weitgehend lastfrei auf die Netzanschlußleitung (7) eines Endgeräts und/oder einer TK-Anlage eingekoppelt oder ausgekoppelt werden
b) die über die Netzanschlußleitung (7) übertragenen Signale (11) in binäre Signale (12) umgewandelt werden, wobei die vom Endgerät oder von der TK-Anlage erzeugten Wählsignale (11) in eine binäre Signalfolge (12) umgewandelt werden, die wenigstens teilweise der gewählten Ziffernkombination entspricht;
c) in einer Datenbank (6) Gebührendaten für verschiedene Netzbetreiber und/oder Zeiten und/oder Anrufziele und/oder Anrufzielklassen gespeichert sind;
d) anhand charakteristischer Parameter des binären Signals (12) Gebührendaten der aktuellen Telekommunikationsverbindung aus der Datenbank (6) abfragt werden und die Dauer T eines Gebührentakts bestimmt wird;
e) während der Dauer der Kommunikationsverbindung Gebührenimpulse (14) im Takt T erzeugt werden, welche auf die Netzanschlußleitung (7) gegeben werden und vom Endgerät bzw. der TK-Anlage verwertet werden.
